# EUROPÄISCHE PATENTSCHRIFT

(11) **EP 0 709 590 B1**
(45) Veröffentlichungstag und Bekanntmachung des Hinweises auf die Patenterteilung: **31.03.1999**
(21) Anmeldenummer: 95116476.3
(22) Anmeldetag: 19.10.1995
(51) Int. Cl.: F16C 35/06, F16C 33/08, F16D 1/08

(54) **Lagersitz auf einem Bolzen mit Zwischenring**
Mounting of a bearing on a trunnion with a spacer ring
Montage d'un palier sur un tourillon avec une bague intermédiaire

(30) Priorität: 26.10.1994 DE 4438199
(43) Veröffentlichungstag der Anmeldung: 01.05.1996
(73) Patentinhaber: ALSTOM LHB GmbH, 38239 Salzgitter (DE)
(72) Erfinder: Seiwert, Günter, D-38231 Salzgitter (DE); Uhlich, Klaus, D-38118 Braunschweig (DE)

(56) Entgegenhaltungen:
- DE-U- 8 913 649
- DE-U- 9 417 165
- FR-A- 1 511 836
- US-A- 3 923 408
- US-A- 4 435 100
- US-A- 5 380 102

## Beschreibung

Die Erfindung betrifft einen Lagersitz auf einem Bolzen mit Zwischenring.

Aus der DIN 25109 Teil 2, Seite 5 sind Bolzen (Wellenschenkel) für Gelenklager, z.B. nach DIN 648, Seite 2, bekannt, die an ihren Wellenbünden oder am Bolzenkopf Ausrundungen zur Verminderung der Kerbwirkung aufweisen.

Um nun Lagerringe sicher an den senkrechten Teil des Wellenbundes anlegen zu können, finden Zwischenringe Verwendung, die sich einerseits an der senkrechten Schulter des Wellenbundes oder Bolzenkopfes und andererseits an der dazu parallelen Schulter des Gelenklagerkopfes oder des Innenringes bei Wälzlagern abstützen.

Wenn der Durchmesser der zum Bund bzw. Bolzenkopf weisenden Kreisringfläche des Zwischenringes größer als der Durchmesser der Kreisringfläche ist, die an der Schulter des inneren Lagerringes bzw. Gelenklagerkopfes anliegt, entsteht bei Axiallast aus Richtung des Bolzenkopfes ein Moment in Richtung auf ein öffnen bzw. Aufsprengen des Zwischenringes.

Ein aus der US-A-3,923,408 bekannter Lagersitz weist einen Bund bzw. Bolzenkopf mit einer zu dem Zwischenring weisenden, geneigten Schulter auf, wobei der Zwischenring mit einer dazu passenden Ausformung und Neigung ausgebildet ist. Der vorstehend genannte Nachteil hinsichtlich der Gefahr des Aufsprengen des Innenring besteht hier gleichfalls.

Der Erfindung liegt die Aufgabe zugrunde, einen Lagersitz auf einem Bolzen mit Zwischenring derart auszubilden, daß der vorstehend geschilderte Nachteil beseitigt wird.

Diese Aufgabe wird erfindungsgemäß mit den Merkmalen in Anspruch 1 gelöst.

Vorteilhafte Weiterbildungen sind in den Unteransprüchen angegeben.

Ein Ausführungsbeispiel der Erfindung ist schematisch in der Zeichnung dargestellt und wird im folgenden näher beschrieben.

Es zeigen:

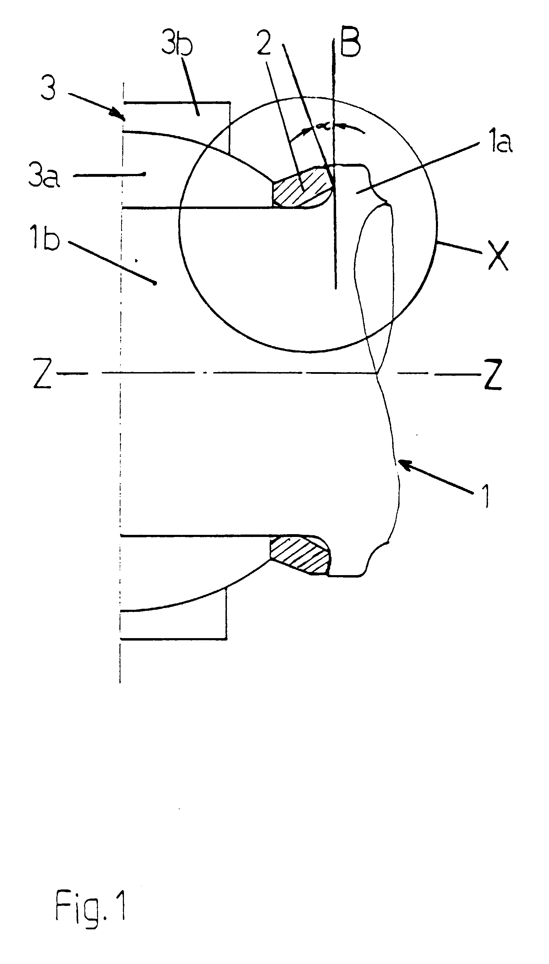

- Fig. 1: einen Längsschnitt durch einen Lagersitz;
- Fig. 2: die Einzelheit X der Fig. 1 im vergrößerten Maßstab.

Ein Bolzen 1 weist einen Bund oder Bolzenkopf la auf. Auf den Schaft 1b des Bolzens 1 ist ein Zwischenring 2 aufgeschoben, der auf der einen Seite am Bund/Bolzenkopf la zur Anlage kommt, und auf der anderen Seite als Anlage für einen inneren Lagerring oder Gelenklagerkopf 3a eines Lagers 3 dient. Der Durchmesser, der zum Bund bzw. Bolzenkopf la weisenden Kreisringfläche des Zwischenrings 2 ist größer als der Durchmesser der Kreisringfläche, die an der Schulter des inneren Lagerrings bzw. Gelenklagerkopfes 3a anliegt.

Das Lager 3 ist im Ausführungsbeispiel als Gleitlager, insbesondere Gelenklager nach DIN 648 mit Gelenklagerkopf 3a und Gelenklagerring 3b, ausgebildet.

Der Bund/Bolzenkopf la ist auf der zum Zwischenring 2 weisenden Schulter zum Zwischenring 2 hin geneigt ausgebildet, wobei der Winkel α zwischen Bund/Bolzenkopf la und Schaft 1b, gemessen von der Bezugsgeraden B, kleiner als 90° ausgebildet ist. Der anliegende Zwischenring 2 weist eine passende, entsprechende Neigung auf.

Bei Axiallast aus Richtung des Bundes/Bolzenkopfes la werden die einwirkenden Kräfte über die geneigte Schulter des Bundes/Bolzenkopfes 1a über den Zwischenring 2 in Richtung auf die Bolzenachse Z gelenkt, wodurch sich ein schließendes Moment für den Zwischenring 2 einstellt.

Bei gerader Schulter würde sich unter gleichen Einbau- und Lastbedingungen ein öffnendes Moment für den Zwischenring 2 einstellen. Dadurch wäre ein Aufsprengen bzw. eine Zerstörung bei geringeren Kräften möglich.

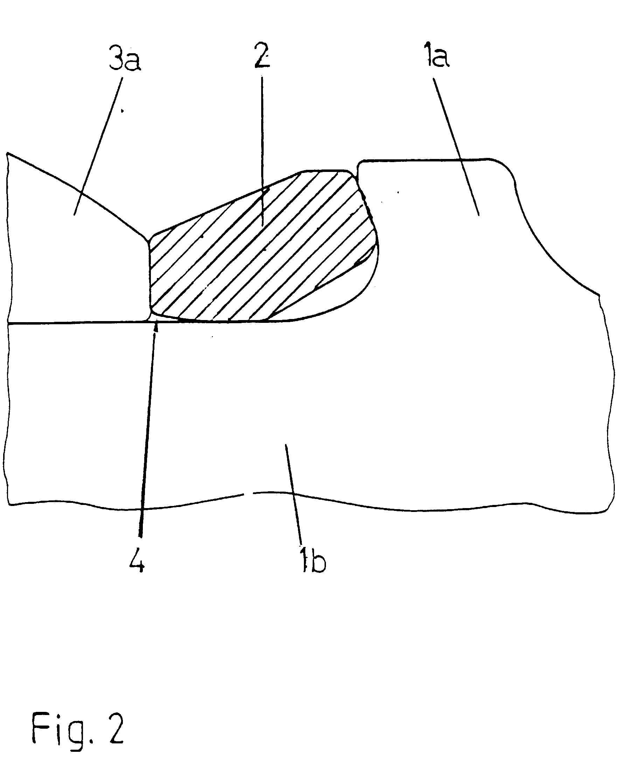

Wie aus Figur 2 ersichtlich, ist an der zum inneren Lagerring bzw. Gelenklagerkopf 3a weisenden Kreisringfläche des Zwischenringes 2 am zum Schaft 1b weisenden Rand ein umlaufender Freistich 4 (Freiraum) am Zwischenring 2 zur Verminderung der Kerbwirkung vorgesehen.

## Patentansprüche

1. Lagersitz auf einem Bolzen (1) mit Zwischenring (2), wobei der Zwischenring (2) auf der einen Seite mit einer Kreisringfläche am Bund/Bolzenkopf (1a) und auf der anderen Seite mit einer Kreisringfläche an einem inneren Lagerring (3a) anliegt und der Bund/Bolzenkopf (1a) auf der zum dem Zwischenring 2 weisenden Schulter geneigt ausgebildet ist und der mit einer Kreisringfläche anliegende Zwischenring (2) eine dazu entsprechende, passende Neigung aufweist, **dadurch gekennzeichnet,** daß der Winkel α zwischen Bund/Bolzenkopf (1a) und Schaft (1b) kleiner als 90° ausgebildet ist, gemessen von der Bezugsgeraden (B), die in einer Ebene senkrecht zur Bolzenachse angeordnet ist, derart, daß eine bei Axiallast aus Richtung des Bundes/Bolzenkopfes (1a) einwirkende Kraft über die geneigte Schulter des Bundes/Bolzenkopfes (1a) über den Zwischenring (2) in Richtung auf die Bolzenachse (Z) gelenkt wird.

2. Lagersitz nach Anspruch 1, **dadurch gekennzeichnet**, daß der Winkel zwischen Bund/Bolzenkopf (1a) und Schaft (1b), gemessen von der Bezugsgeraden (B), kleiner als 45° ausgebildet ist.

3. Lagersitz nach Anspruch 1 oder 2, **dadurch gekennzeichnet,** daß an der zum inneren Lagerring bzw. Gelenklagerkopf (3a) weisenden Kreisringfläche des Zwischenringes (2) am zum Schaft (1b) weisenden Rand ein umlaufender Freistich (4) am Zwischenring (2) vorgesehen ist.

## Claims

1. Bearing seat on a pin (1) with an intermediate ring (2), whereby the intermediate ring (2) bears on one side with an annular surface on the collar/pin head (1a) and on the other side with an annular surface on an inner bearing ring (3a) and the collar/pin head (1a) is inclined on the shoulder facing the intermediate ring (2) and the intermediate ring (2) bearing with one annular surface exhibits a corresponding matching inclination, characterised in that the angle α between collar/pin head (1a) and shank (1b) is less than 90° measured from the reference straight line (B) which is disposed in a plane perpendicular to the axis of the pin such that a force acting with an axial load from the direction of the collar/pin head (1a) is directed through the inclined shoulder of the collar/pin head (1a) via the intermediate ring (2) in the direction of the axis (Z) of the pin.

2. Bearing seat according to claim 1, characterised in that the angle between collar/pin head (1a) and shank (1b) measured from the reference straight line (B) is less than 45°.

3. Bearing seat according to claim 1 or 2, characterised in that a circumferential undercut (4) is provided on the intermediate ring (2) on the annular surface of the intermediate ring (2) facing the inner bearing ring or pivoting bearing head (3a) on the edge facing the shank (1b).

## Revendications

1. Ajustement de palier sur un goujon (1) à bague intermédiaire (2), la bague intermédiaire (2) étant appliquée d'un côté, avec une surface annulaire, contre le collet/la tête de goujon (1a) et de l'autre côté, avec une surface annulaire, contre la bague de palier intérieure (3a), et le collet/la tête de goujon (1a) étant incliné sur l'épaulement tourné vers la bague intermédiaire (2), tandis que la bague intermédiaire (2) appliquée avec une surface annulaire présente une inclinaison correspondante, **caractérisé** en ce que l'angle α entre le collet/la tête de goujon (1a) et la tige (1b) est inférieur à 90°, mesuré par rapport à la droite de référence (B) qui est disposée dans un plan perpendiculaire à l'axe du goujon, de telle sorte qu'une force agissant dans le cas d'une charge axiale provenant du collet/de la tête de goujon (1a) est déviée en direction de l'axe de goujon (Z) par l'épaulement incliné du collet/de la tête de goujon (1a), par l'intermédiaire de la bague intermédiaire (2).

2. Ajustement de palier selon la revendication 1, **caractérisé** en ce que l'angle entre le collet/la tête de goujon (1a) et la tige (1b), mesuré par rapport à la droite de référence (B), est inférieur à 45°.

3. Ajustement selon la revendication 1 ou 2, **caractérisé** en ce qu'un dégagement circulaire (4) est prévu sur la surface annulaire de la bague intermédiaire (2) qui est dirigée vers la bague de palier intérieure ou vers la tête de palier d'articulation (3a), sur le bord tourné vers la tige (1b).
